(19) Europäisches Patentamt

European Patent Office

Office européen des brevets

(11) **EP 1 375 133 B1**

(12) **EUROPÄISCHE PATENTSCHRIFT**

(45) Veröffentlichungstag und Bekanntmachung des Hinweises auf die Patenterteilung:
**25.01.2006  Patentblatt 2006/04**

(51) Int Cl.:
*B32B 27/36* *(2006.01)*     *B65D 65/40* *(2006.01)*

(21) Anmeldenummer: **03012257.6**

(22) Anmeldetag: **11.06.2003**

(54) **Mehrschichtige, transparente Folie aus Polyethylenterephthalat (PET) und Polyethylennaphthalat (PEN) zur Herstellung von Verbundverpackungen mit UV-Schutz**

Multilayered transparent foil comprising polyethyleneterephthalate and polyethylenenaphthalate, for the manufacture of laminated packages with UV protection

Feuille multicouche transparente à base de polyéthylène téréphthalate et de polyéthylène naphthalate, pour la fabrication d'emballages laminés avec protection UV

(84) Benannte Vertragsstaaten:
**DE FR GB LU**

(30) Priorität: **20.06.2002  DE 10227442**

(43) Veröffentlichungstag der Anmeldung:
**02.01.2004  Patentblatt 2004/01**

(73) Patentinhaber: **Mitsubishi Polyester Film GmbH 65203 Wiesbaden (DE)**

(72) Erfinder:
• **Kliesch, Holger, Dr.**
  **55252 Mainz (DE)**
• **Kiehne, Thorsten, Dr.**
  **65185 Wiesbaden (DE)**
• **Janssens, Bart, Dr.**
  **65187 Wiesbaden (DE)**
• **Schmiedeskamp, Christine**
  **65195 Wiesbaden (DE)**

(74) Vertreter: **Schweitzer, Klaus et al Patentanwaltskanzlei Zounek, Industriepark Kalle-Albert, Gebäude H391 Rheingaustrasse 190-196 65174 Wiesbaden (DE)**

(56) Entgegenhaltungen:
EP-A- 1 179 418          WO-A-01/96107
WO-A-95/17303          WO-A-96/35571
WO-A-97/32723          WO-A-97/32724
WO-A-97/32725

**Beschreibung**

Die Erfindung betrifft eine mindestens zweischichtige, transparente Folie mit einer verringerten Durchlässigkeit für UV-Strahlung. Die Folie enthält sowohl Terephthalsäure- als auch Naphthalindicarbonsäureeinheiten, wobei mindestens eine Außenschicht (Deckschicht) weniger als 0,1 % PEN enthält. Die Erfindung betrifft ferner ein Verfahren zur Herstellung dieser Folie und ihre Verwendung in Verbund-Verpackungen mit verlängerter Shelflife.

Wichtige Kenngrößen für die Eignung einer Folie für die Verpackung von verderblichen Gütern sind die Sauerstoffbarriere und bei durchsichtigen Verpackungen zusätzlich ihre UV (ultravioletter Anteil des Lichtes)-Durchlässigkeit. Der zweite Punkt ist besonders bei Lebensmitteln von Bedeutung, die z. B. in Supermärkten in Theken präsentiert werden, die von Lampen mit relativ hoher UV-Emission bestrahlt werden. Bei zu hoher UV-Durchlässigkeit der Verpackung kann es hier zu unschönen Verfärbungen und Geschmacksveränderungen kommen.

Ein besonders wichtiges drittes Kriterium für die Eignung einer Verpackungsfolie ist ihr Preis, da im Endverbrauchermarkt auch kleinere Preisunterschiede die Kaufentscheidung zu einem günstigeren Produkt hin verschieben können, auch wenn die Verpackung hohen Qualitätsansprüchen an die Haltbarkeit nicht gerecht wird.

Bei den derzeit kommerziell erhältlichen Verpackungsfolien auf Polyesterbasis handelt es sich fast ausschließlich um Folien auf PET- (Polyethylenterephthalat)-Basis, z. B. Hostaphan® RNK (Mitsubishi Polyester Film GmbH, Wiesbaden). Solche Folien sind zwar preisgünstig und besitzen in der Regel bereits eine für viele Anwendungen akzeptable Sauerstoffbarriere, die jedoch insbesondere bei durchsichtigen unmetallisierten Verpackungen häufig nicht ausreicht. Außerdem besitzt PET eine noch relativ hohe UV-Lichtdurchlässigkeit.

Folien aus PEN (Polyethylennaphthalat) weisen eine wesentlich höhere Sauerstoffbarriere auf und haben außerdem eine geringere UV-Durchlässigkeit, sind aber aufgrund des hohen Preises von PEN unwirtschaftlich und werden daher in der Praxis kaum verwendet.

Dieses Problem kann zwar teilweise durch die Verwendung von Mehrschichtfolien reduziert werden, welche eine oder mehrere PEN-Schichten auf einer PET-Basis enthalten (z. B. DE-A-197 20 505 oder WO 01/96114). Diese Folien haben jedoch Probleme mit der Delamination der Schichten aus den unterschiedlichen Polyestern und sind in der Produktion schwieriger herzustellen. Außerdem kann das anfallende Regenerat nicht mehr zum gleichen Wert wiederverwendet werden, da sich PET und PEN bei der Regenerierung mischen und so nicht mehr zur Erzeugung der teuren 100 % oder nahezu 100 % PEN-Schichten herangezogen werden können, sondern nur noch das vergleichsweise billige PET ersetzen. Aus diesen Gründen sind solche Folien zwar billiger als Folien, die zum überwiegenden Teil aus PEN bestehen, sind aber erheblich teurer als Standard-PET-Verpackungsfolien und kommen daher nur in Nischenmärkten mit besonderen Ansprüchen zum Einsatz.

Folien aus Blends von PET und PEN sind ebenfalls beschrieben (z. B. GB 2 344 596), es fehlen hier jedoch die Hinweise, wie sich aus diesen Blends eine Folie mit verbesserter UV- und Sauerstoffbarriere herstellen lässt, die zur Produktion von transparenten Verpackungen mit erhöhter Shelflife eingesetzt werden kann. Auch fehlen Hinweise darauf, welche PET/PEN-Mengenverhältnisse sich für die Herstellung von Folien mit guter Sauerstoff- und UV-Barriere eignen.

Die UV-Durchlässigkeit von Polyesterfolien kann ganz allgemein auch durch den Zusatz von UV-Stabilisatoren/Absorbern wie z. B. Tinuvin® (Ciba Specialty Chemicals, Schweiz) verbessert werden. Die Verwendung solcher Verbindungen ist aber ebenfalls mit relativ hohen Kosten verbunden und bringt je nach verwendetem Stabilisator auch Probleme in der Eignung für den direkten Lebensmittelkontakt.

Verpackungen aus PEN- oder PET/PEN-Copolymeren (oder Blends) zeichnen sich andererseits durch eine sehr hohe blaue Fluoreszenzintensität aus, wenn sie mit UV-Licht bestrahlt werden. Diese Intensität liegt bei PET/PEN-Copolymeren mit niedrigem PEN-Gehalt < 5 % sogar noch höher als bei reinem PEN. Während eine leichte blaue Fluoreszenz sogar gewünscht sein kann, um einen Gelbstich der Folie zu eliminieren, führt eine starke deutlich sichtbare blaue Fluoreszenz zu einem unnatürlichen (künstlichen) Aussehen des Füllgutes, was den Verbraucher in seiner Kaufentscheidung negativ beeinflussen kann. Eine solche Fluoreszenz sollte also nach Möglichkeit vermieden werden.

Aufgabe der vorliegenden Erfindung war es nun, eine Folie mit gegenüber reinen PET-Folien verbesserter Sauerstoff- und UV-Barriere zur Verfügung zu stellen, die sich kostengünstig produzieren lässt und für Verpackungsanwendungen geeignet ist, die auch bei höheren UV-Dosen eine gegenüber PET-Folien enthaltenden Verpackungen verbesserte Lebensdauer des verpackten Gutes gewährleistet. Die Folie bzw. die daraus hergestellte Verpackung sollte außerdem bei Bestrählung mit UV-Licht nicht zu einer besonders starken blauen Fluoreszenzerscheinung neigen.

Gelöst wird dies durch eine mindestens zweischichtige Polyesterfolie mit einer Gesamtdicke von 5 bis 200 $\mu$m, bevorzugt 6 bis 50 $\mu$m und besonders bevorzugt 8 bis 14 $\mu$m, die, bezogen auf die Masse der Gesamtfolie, neben Polyethylenterephthalat (PET) 2 bis 20 Gew.-%, bevorzugt 4 bis 16 Gew.-% und besonders bevorzugt 6 bis 12 Gew.-%, Polyethylennaphthalat (PEN) enthält, wobei mindestens eine Deck(Außen)schicht, bezogen auf die Masse dieser Außenschicht, weniger als 0,1 Gew.-% PEN, bevorzugt weniger als 0,05 Gew.-% und besonders bevorzugt 0 Gew.-% PEN, aufweist (diese Schicht wird im folgenden auch PEN-freie Schicht genannt).

Weiter betrifft die Erfindung Verpackungen, die aus diesen Polyesterfolien hergestellt werden. Abgesehen von der Einschränkung für mindestens eine Außenschicht ist es unwichtig, wie sich das Polyethylennaphthalat auf die einzelnen Schichten der Folie verteilt. Es hat sich allerdings als zweckmäßig erwiesen, wenn der Anteil an Polyethylennaphthalat in jeder Schicht einen Gehalt von 25 Gew.-% nicht überschreitet, da anderenfalls eine ausreichende Kristallisierbarkeit bzw. Orientierung der Folie nicht gewährleistet ist (Ausnahme sind siegelfähige Folien, die in der siegelfähigen Schicht mehr als 25 Gew.-% PEN enthalten können).

Überraschenderweise reichen die erfindungsgemäß niedrigen PEN-Gehalte sowohl bei der Herstellung der Folie aus Mischungen von PET- und PEN-Chips (Blockcopolymere) als auch bei der Verwendung statistischer Copolymere aus, um eine deutliche Verlängerung der Lebensdauer von Lebensmitteln zu erreichen, die mittels dieser Folie verpackt wurden, im Vergleich zu Verpackungen aus herkömmlichen PET-Folien. Die erreichbare Verbesserung ist dabei abhängig von der Menge an PEN und der Foliendicke. So reichen für eine 50 bis 200 $\mu$m dicke Folie 3 bis 8 Gew.-% PEN aus, um während einer Lagerung von einem Monat unter den in herkömmlichen Kühltheken in Supermärkten herrschenden UV-Intensitäten eine Verfärbung des verpackten Fleisches bzw. sonstigen Füllgutes zu verhindern. Bei Folien zwischen 8 und 24 $\mu$m sind für ähnlich gute Resultate 5 bis 16 Gew.-% PEN nötig. Die erfindungsgemäßen Folien weisen eine Transmission bei 330 nm von kleiner 25 % und bevorzugt von kleiner 10 % auf. Bei 350 nm weisen die erfindungsgemäßen Folien eine Transmission von kleiner 25 % und bevorzugt von kleiner 10 % auf.

PEN-Konzentrationen höher als der erfindungsgemäße Bereich führen zu einer reduzierten bis schließlich ausbleibenden Kristallisationsneigung. Dies führt wiederum zu einer deutlichen Abnahme der Sauerstoff- und Wasserdampfbarriere und zu einer deutlichen Verschlechterung der Verarbeitungseigenschaften. Für das Erreichen einer ausreichenden Sauerstoffbarriere von kleiner 110 {cm$^3$/(m$^2$·d·bar)}·{Foliendicke [$\mu$m]/12 [$\mu$m]} bzw. bevorzugt von kleiner 100 {cm$^3$/(m$^2$·d·bar)}·{Foliendicke [$\mu$m]/12 [$\mu$m]} und besonders bevorzugt von kleiner 95 {cm$^3$/(m$^2$·d·bar)}·{Foliendicke [$\mu$m]/12 [$\mu$m]} ist es daher auch vorteilhaft, wenn im DSC (Digital Scanning Calorimeter) unter den in Messmethoden beschriebenen Bedingungen mindestens ein Schmelzpeak zwischen 230 und 270 °C, bevorzugt zwischen 240 und 265 °C, auftritt.

Für das Erreichen der genannten Barriere ist es weiterhin günstig, wenn die PEN-Konzentration der Folie bei mindestens 5 Gew.-% liegt.

Es hat sich weiterhin überraschend gezeigt, dass die blaue Fluoreszenz vermieden oder stark reduziert werden kann, wenn die Folie in der Verpackung - meist ein Laminat aus der erfindungsgemäßen Folie mit beispielsweise Polyethylen, Polypropylen o.ä. - so angeordnet ist, dass ihre PEN-freie Deckschicht dem eingestrahlten Licht zugewandt ist.

Neben den erfindungsgemäßen Anteilen an PEN enthält die erfindungsgemäße Folie als Hauptbestandteil PET, d. h. Polyethylenterephthalat. Neben Terephthalsäure (TPA) und 2,6-Naphthalindicarbonsäure (NDA) als Monomere kann die Folie 0 bis 20 Gew.-% Isophthalsäure, bevorzugt 0,5 bis 2,5 Gew.-%, enthalten, wobei sich überraschenderweise gezeigt hat, dass ein Gehalt von 0,5 bis 2,5 Gew.-% Isophthalsäure (IPA) zu einer weiteren Verbesserung der Sauerstoffbarriere von 2 bis 5 % führt. Neben den genannten Dicarbonsäuren sind selbstverständlich auch ihre Dimethylester geeignete Monomere. Andere Dicarbonsäuren bzw. Dimethylester wie z. B. 1,5-Naphthalindicarbonsäure sollten einen Anteil von 6 Gew.-%, bevorzugt 2 Gew.-%, nicht überschreiten.

Das Hauptmonomer der Diolkomponente ist Ethylenglycol (EG). Im Gegensatz zu dem genannten positiven Effekt von IPA verringert sich die Sauerstoffbarriere mit steigendem Diethylenglycolanteil (DEG). Daher sollte der DEG-Anteil 3 Gew.-% nicht überschreiten und liegt idealerweise zwischen 0,5 und 1,5 Gew.-%. Andere Comonomeren-Diole wie z. B. Cyclohexandimethanol, 1,3 Propandiol, 1,4-Butandiol sollten einen Anteil von 5 Gew.-% nicht überschreiten und liegen bevorzugt bei einem Anteil von weniger als 3 Gew.-%. Alle diese Angaben beziehen sich genauso wie der Gehalt an PEN auf das Gesamtgewicht der Folie. Etwaige funktionelle Deckschichten können für sich betrachtet je nach Funktionalität andere Gehalte an Monomeren enthalten.

Die erfindungsgemäße Folie ist mindestens zweischichtig. Bevorzugt im Sinne der Erfindung sind Aufbauten aus einer PEN-haltigen Schicht (Basisschicht (B)) und mindestens einer PEN-freien Außenschicht (Deckschicht (A)). Bevorzugt sind weiterhin Folien mit einer PEN-haltigen Basisschicht (B) und zwei PEN-freien Deckschichten (A) bzw. (A) und (A'). Bevorzugt sind weiterhin Folien mit einer PEN-haltigen Basisschicht (B) und einer PEN-freien Deckschicht (A) und einer weiteren Deckschicht (C) auf der (A) gegenüberliegenden Seite der Basisschicht. Diese Schicht (C) weist in bevorzugten Ausführungsformen eine zusätzliche Funktionalität auf. Diese Funktionalität kann beispielsweise Siegelfähigkeit, Glanz oder Mattheit sein. In einer bevorzugten Ausführungsform ist die funktionelle Schicht C siegelfähig. Bevorzugt sind weiterhin Aufbauten aus einer PEN-haltigen Schicht und einer PEN-freien Basisschicht, die dann gleichzeitig die Außenschicht darstellt.

Die Dicke der Außen- bzw. Deckschicht(en) wird unabhängig von den anderen Schichten gewählt und liegt bevorzugt im Bereich von 0,1 bis 10 $\mu$m, insbesondere 0,2 bis 5 $\mu$m, vorzugsweise 0,3 bis 2 $\mu$m, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht(en) und kann daher analog der Gesamtdicke innerhalb weiter Grenzen variieren. Generell ist die Basisschicht entweder die dickste aller vorhandenen Schichten oder die am weitesten innen liegende Schicht. Nur, sofern sich auf einer oder beiden Oberflächen einer solchen Basisschicht keine weitere(n) Deckschicht(en) mehr befindet(n), kann diese auch 'Außenschicht' sein.

Die PEN-freie Deckschicht (A) enthält zweckmäßigerweise Partikel. Die Partikelkonzentration in dieser Schicht liegt zwischen 0,005 und 10,0 Gew.-%, vorteilhaft zwischen 0,12 und 0,8 Gew.-% und insbesondere zwischen 0,15 und 0,6 Gew.-%. Verwendbare Partikel sind z. B. anorganische Partikel wie Kaolin, Talk, $SiO_2$, $MgCO_3$, $CaCO_3$, $BaCO_3$, $CaSO_4$, $BaSO_4$, $Li_3PO_4$, $Ca_3(PO_4)_2$, $Mg_3(PO_4)_2$, $TiO_2$, $Al_2O_3$, MgO, SiC, LiF oder die Ca-, Ba-, Mn-Salze der Terephthalsäure. Es können allerdings auch Teilchen auf Basis vernetzter, unschmelzbarer, organischer Polymerer wie z. B. Polystyrole, Polyacrylate, Polymethacrylate zugesetzt werden.

Die in einer bevorzugten Ausführungsform durch Koextrusion auf die Basisschicht B aufgebrachte siegelfähige Deckschicht (C) ist zweckmäßigerweise auf Basis von Polyestercopolymeren aufgebaut. Bevorzugt im Sinne der Erfindung sind dabei zwei Varianten:

a: Copolyester aus Terephthalsäure und Isophthalsäure

b: Copolyester aus Terephthalsäure und Naphthalindicarbonsäure

Variante a:

Die siegelfähige Deckschicht besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Variante b:

Die siegelfähige Deckschicht besteht im wesentlichen aus Copolyestern, die überwiegend aus Naphthalindicarbonsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Ethylenterephthalat- und Ethylennaphthalat-Einheiten aufgebaut sind. Der Anteil an Ethylenterephthalat beträgt 30 bis 75 Mol-% und der entsprechende Anteil an Ethylennaphthalat 70 bis 25 Mol-%. Bevorzugt sind Copolyester, bei denen der Anteil an Ethylenterephthalat 40 bis 60 Mol-% und der entsprechende Anteil an Ethylenisophthalat 40 bis 60 Mol-% beträgt.

Sollte der Gehalt an PEN in der Siegelschicht nicht ausreichen, um den erfindungswesentlichen Gesamtgehalt der Folie an PEN zu erreichen, so muss der fehlende PEN-Anteil der Basisschicht hinzugefügt werden, und es muss eine PEN-freie Deckschicht aufgebracht werden.

Die Varianten a und b können miteinander kombiniert werden. Die Mindestmengen an Isophthalsäure bzw PEN lassen sich dadurch verringern. Es hat sich bei PET/PEN/IPA-Siegelschichten jedoch als günstig erwiesen, wenn der PEN-Anteil der Siegelschicht (C) bei mindestens 15 Gew.-% und der Isophthalsäureanteil bei mindestens 5 Gew.-% liegt.

Die Herstellung der Polyester kann sowohl nach dem Umesterungsverfahren mit den üblichen Katalysatoren wie z. B. Zn-, Ca-, Li- und Mn-Salzen oder nach dem Direktveresterungsverfahren erfolgen.

Der Polyesterrohstoff für die jeweilige Schicht enthält gegebenenfalls die oben bereits genannten üblichen Additive (Partikel). Bevorzugt werden die Partikel in einer Konzentration von 0,005 bis 10,0 Gew.-%, besonders bevorzugt in einer Konzentration von 0,01 bis 0,5 Gew.-%, eingesetzt. Die durchschnittliche Teilchengröße beträgt 0,001 bis 10 $\mu$m, bevorzugt 0,005 bis 3 $\mu$m.

Die Standardviskosität SV (DCE) des eingesetzten Polyesterrohstoffs, gemessen in Dichloressigsäure nach DIN 53728, liegt zweckmäßigerweise zwischen 400 und 1200, vorzugsweise zwischen 700 und 900.

In einer bevorzugten Ausführungsform wird der Folie der PEN-Anteil oder ein Teil des PEN-Anteils zugeführt, indem ein Regenerat (= aus Produktionsabfall hergestellter Polymerrohstoff) aus einer anderen PEN-Anwendung (d. h. Folienproduktion, bei der eine andere PEN-haltige Folie für einen anderen Anwendungszweck hergestellt wird) zudosiert wird. Dies kann z. B. Regenerat aus einer PEN-Kondensatorfolienproduktion sein (in der Regel 100 Gew.-% PEN) oder besonders bevorzugt ein Regenerat aus einer Anwendung, bei der wie eingangs erwähnt eine oder mehrere PEN-Schichten auf einer PET-Basis verwendet werden. Es hat sich gezeigt, dass die Laufsicherheit bei Verwendung eines solchen Regenerats besonders gut ist, da hier PET und PEN bereits vorgemischt sind und es so zu einer besseren Verstreckbarkeit kommt. Bei Verwendung von reinem PEN-Regenerat hat es sich als günstig erwiesen, wenn dieses nicht - wie sonst vor dem Wiedereinsatz üblich - festphasenkondensiert wird. Neben diesem Fremdregenerat enthält die Folie noch bis zu 65 Gew.-% eigenes Regenerat oder Regenerat aus anderen PET-Folienanwendungen, wobei es sich als günstig für die Prozessstabilität erwiesen hat, wenn die Folie mindestens 20 Gew.-% eigenes Regenerat enthält (da dann PET/PEN bereits gut gemischt).

Die Erfindung betrifft weiterhin ein Verfahren zur Herstellung der erfindungsgemäßen Polyesterfolie nach dem an sich bekannten Extrusions- oder Koextrusionsverfahren.

Im Rahmen dieses Verfahrens wird so vorgegangen, dass die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung wird im allgemeinen sequentiell durchgeführt. Dabei wird vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer Orientierung der Molekülketten des Polyesters. Das Strecken in Längsrichtung erfolgt bevorzugt mit Hilfe zweier entsprechend dem angestrebten Streckverhältnis mit unterschiedlichen Geschwindigkeiten rotierender Walzen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei 80 bis 130 °C, bevorzugt bei 90 bis 120 °C, besonders bevorzugt bei 100 bis 110 °C, und die Querstreckung bei 90 bis 150 °C, bevorzugt bei 90 bis 120 °C, besonders bevorzugt bei 100 bis 110 °C, durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Die Streckung kann auch in einem Simultanstreckrahmen (Simultanstreckung) erfolgen, wobei die Anzahl der Streckschritte und die Abfolge (längs/quer) nicht von entscheidender Bedeutung für das Eigenschaftsbild der Folie ist. Die Streckverhältnisse entsprechen denen im herkömmlichen sequentiellen Prozess.

Bei der nachfolgenden Thermofixierung wird die Folie etwa 0,1 bis 10 s lang bei einer Temperatur von 150 bis 250 °C, bevorzugt von 190 bis 240 °C, besonders bevorzugt von 210 bis 230 °C, gehalten. Anschließend wird die Folie abgekühlt und dann in üblicher Weise aufgewickelt. Zur Einstellung weiterer gewünschter Eigenschaften kann die Folie allerdings vor dem Aufwickeln noch chemisch behandelt werden oder auch corona- bzw. flammbehandelt sein. Die Behandlungsintensität wird so eingestellt, dass die Oberflächenspannung der behandelten Folie bei größer/gleich 45 mN/m liegt.

Die Folie kann zur Einstellung weiterer Eigenschaften beschichtet werden. Typische Beschichtungen sind haftvermittelnde, antistatisch, schlupfverbessernd oder dehäsiv wirkende Schichten. Es bietet sich an, diese zusätzlichen Schichten über das dem Fachmann geläufige "In-line coating" mittels wässriger Dispersionen nach der Längs- und vor der Querstreckung auf die Folie aufzubringen.

In einer weiteren Ausführungsform für Anwendungen mit besonders hohen Ansprüchen an die Barriere wird die Folie mit einer Metall(Halbmetall)oxydschicht wie z. B. $Al_2O_x$ oder $SiO_x$ bedampft.

Der letztlich für Verpackungszwecke eingesetzte Folienverbund enthält neben der erfindungsgemäßen Folie (= Folie I) je nach Verwendungszweck weitere Folien (= Folie II), beispielsweise Folien aus PET oder aus einem orientierten Polyamid (oPA) oder Polyethylen (PE)- bzw. Polypropylen (PP)-Siegelfolien, oder die Folie oder der Verbund kann zur Steuerung der Siegeleigenschaften mit einer Siegelschicht aus beispielsweise PP oder PE beschichtet sein. Das Zusammenfügen der einzelnen Folien zu einem Folienverbund erfolgt bevorzugt mittels Kaschierklebem, z. B. auf der Basis von Polyurethan.

Die letztlich zum Einsatz kommende Verpackung besteht dann entweder aus dem mit sich selbst gesiegelten Verbund (Beutelverpackung), oder der Verbund wird als "Deckel" auf eine Unterlage (Tray) aufgebracht. Bei der zweiten Möglichkeit ist zu beachten, dass der Tray, falls transparent, ebenfalls eine geringe UV-Durchlässigkeit aufweisen sollte, was z. B. durch Aufkaschieren der erfindungsgemäßen Folie erreicht werden kann. Transparente Laminate oder Verbunde sind beispielsweise in DE-A-33 00 411 und DE-A-26 44 209 beschrieben.

Die Gesamtdicke der erfindungsgemäßen Verbundfolie, die sich mindestens aus der erfindungsgemäßen Folie I und einer Folie II zusammensetzt, kann innerhalb weiter Grenzen variieren und richtet sich nach dem Einsatzzweck. Bevorzugt haben die erfindungsgemäßen Verbundfolien eine Dicke im Bereich von 9 bis 1200 µm, insbesondere von 10 bis 1000 µm, besonders bevorzugt von 20 bis 800 µm.

Die Folie II der erfindungsgemäßen Verbundfolie kann eine Thermoplastfolie und/oder eine Standardthermoplastfolie und/oder eine Polyolefinfolie und/oder die erfindungsgemäße Folie I sein. Diese zweite Folie wird bevorzugt auf die Seite der Folie I aufgebracht, die eine zusätzliche Funktionalität aufweist ($SiO_x$-Beschichtung, Corona- und/oder Flammbehandlung und/oder Haftvermittler und/oder Copolyester und/oder $Al_2O_x$-Beschichtung und/oder Druckfarben, um nur einige zu nennen), kann aber auch auf die Folienseite aufgebracht werden, die keine Funktionalität ausweist.

Die Folie II kann einschichtig oder mehrschichtig und kann wie Folie I durch Verstrecken orientiert worden sein und kann mindestens eine Siegelschicht haben. Die zweite Folie kann mit oder ohne Klebstoff mit Folie I gemäß der Erfindung verbunden sein.

Die Dicke dieser Folie II liegt im allgemeinen zwischen 4 und 700 $\mu$m.

Die Verbundfolien erhält man im allgemeinen durch Aufeinanderlaminieren oder Kaschieren mindestens der eingesetzten Folien I und II mit oder ohne dazwischen liegender Klebstoffschicht, indem man diese zwischen auf 30 bis 90 °C temperierten Walzen durchleitet.

Es ist aber beispielsweise auch möglich, die Folie II durch In-line-Beschichtung (Schmelzextrusion) auf die bestehende Folie I aufzubringen.

Bei Verwendung von Klebstoffen werden diese auf eine Folienoberfläche der Folie I und/oder der Folie II nach bekannten Verfahren aufgebracht, insbesondere durch Auftragen aus Lösungen oder Dispersionen in Wasser oder organischen Lösungsmitteln. Die Lösungen haben hierbei gewöhnlich eine Klebstoffkonzentration von 5,0 bis 40,0 Gew.-%, um auf der Folie I und/oder II eine Klebstoffmenge von 1,0 bis 10,0 g/m² zu ergeben.

Als besonders zweckmäßig haben sich Klebstoffe erwiesen, die aus thermoplastischen Harzen wie Celluloseestern und -ethern, Alkyl- und Acrylestern, Polyimiden, Polyurethanen oder Polyestern oder aus hitzehärtbaren Harzen wie Epoxidharzen, Harnstoff/Formaldehyd-, Phenol/Formaldehy- oder Melamin/Formaldehyd-Harzen oder aus synthetischen Kautschuken bestehen.

Als Lösungsmittel für den Klebstoff eigenen sich z. B. Kohlenwasserstoffe wie Ligroin und Toluol, Ester wie Ethylacetat oder Ketone wie Aceton und Methylethylketon.

Überraschend war insbesondere, dass trotz der erfindungsgemäß niedrigen PEN-Gehalte auch Verbunde mit dünnen PET/PEN-Copolymerfolien (z. B. 12 $\mu$m) das Füllgut so gut vor dem Verderben unter UV-Licht schützen, dass Verlängerungen der Shelflife von über 100 % auch ohne die Verwendung von zusätzlichen UV-Absorbern möglich sind.

Die Erfindung wird im folgenden anhand von Ausführungsbeispielen näher erläutert.

Die Messung der einzelnen Eigenschaften erfolgte dabei gemäß der folgenden Normen bzw. Verfahren.

**Messmethoden**

Lichttransmission (z. B. für UV-Transmission)

Unter der Lichttransmission ist das Verhältnis des insgesamt durchgelassenen Lichtes zur einfallenden Lichtmenge zu verstehen.

Die Lichttransmission wird mit dem Messgerät "Hazegard plus" nach ASTM D 1003 gemessen.

SV (DCE), IV (DCE)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität:

$$IV = [\eta] = 6{,}907 \cdot 10^{-4} \, SV \, (DCE) + 0{,}063096 \, [dl/g]$$

Gelbwert

Der Gelbwert G ist die Abweichung von der Farblosigkeit in Richtung "Gelb" und wird gemäß DIN 6167 gemessen. Gelbwert G-Werte von <5 sind visuell nicht sichtbar.

Rauigkeit

Die Rauigkeit $R_a$ der Folie wurde nach DIN 4768 bei einem Cut-off von 0,25 mm bestimmt.

Schmelzpeak:

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Schmelzpeak ermittelt. Als Schmelzpeak wird dabei das Maximum des größten endothermen Peaks zwischen 180 und 280 °C gewertet.

Sauerstoffbarriere

Die Messung der Sauerstoffbarriere erfolgte mit einem OX-TRAN 2/20 von Mocon Modern Controls (USA) entsprechend DIN 53 380, Teil 3.

Shelflife

Je 200 g gekochter Schinken in 2,5 mm dicken Scheiben des Durchmessers 10 cm werden in der Verburidverpackung mit der erfindungsgemäßen Folie platziert und diese anschließend verschlossen. Eine zweite Verbundverpackung des gleichen Typs, aber unter Verwendung einer handelsüblichen PET-Folie gleicher Dicke (hier RNK von Mitsubishi Polyester Film Europe GmbH), wird ebenso gefüllt. Je drei Verpackungen des UV-geschützten erfindungsgemäßen Verbundes und je drei Verpackungen mit der handelsüblichen PET-Folie werden anschließend in eine offene Kühltruhe mit der Temperatur +3 °C verbracht. 1 m über den Verpackungen (Seite mit erfindungsgemäßer Folie oben) sind 5 handelsübliche Neonröhren des Typs Phillips T120W/05 angebracht. Die Verpackungen werden täglich auf sichtbare Verfärbungen überprüft (visuell). Die Zeit bis zum Auftreten von Verfärbungen wird notiert und der Mittelwert (in Stunden) der Verpackungen aus handelsüblicher PET-Folie wird 100 % gesetzt. Die prozentuale Abweichung der erfindungsgemäßen Verpackungen von diesem Wert wird berechnet, indem der Mittelwert (in Stunden), bis an diesen Verpackungen Verfärbungen auftreten, durch den Mittelwert der Verpackungen aus handelsüblicher PET-Folie geteilt wird und mit 100 multipliziert wird. Von dem Ergebnis werden 100 abgezogen.
Bei nachstehenden Beispielen und Vergleichsbeispielen handelt es sich jeweils um einschichtige, transparente Folien unterschiedlicher Dicke.

Folienherstellung

Thermoplast-Chips für die Basisschicht B wurden gemäß den in den Beispielen angegebenen Verhältnissen gemischt und in einem Wirbelschichttrockner bei 155 °C für 1 min vorkristallisiert, anschließend für 3 h in einem Schachttrockner bei 150 °C getrocknet und bei 290 °C in einem Einschneckenextruder aufgeschmolzen. Die Thermoplast-Chips für die Deckschichten A bzw. C wurden gemäß den in den Beispielen angegebenen Verhältnissen gemischt und in einem Zweischneckenextruder bei 290 °C extrudiert. Die geschmolzenen Polymerstränge wurden in einer Koextrusionsdüse zusammengeführt und über eine Abzugswalze abgezogen. Der Film wurde um den Faktor 4,0 in Maschinenrichtung bei 116 °C gestreckt und in einem Rahmen bei 110 °C eine Querstreckung um den Faktor 3,9 durchgeführt. Anschließend wurde die Folie bei 225 °C thermofixiert und in Querrichtung um 2 % bei Temperaturen von 200 bis 180 °C relaxiert.

Verbundherstellung

Aus den Folien aus den Beispielen werden jeweils drei verschiedene Verbunde gefertigt. Der Verbund wird für die Messung der Shelflife auf einen handelsüblichen A-PET-Tray als Unterlage (dem UV-Licht abgewandte Seite) gesiegelt.

Verbund A

Verbundfolie mit PE

Die Folie aus dem Beispiel wird mit einem Kleber (Adcote® 700 A+C der Firma Rohm&Haas, Deutschland) beschichtet, so dass die gebildete Klebstoffschicht 0,5 g/m$^2$ wiegt. Anschließend wird eine 40 μm dicke Folie aus Polyethylen niedriger Dichte (Buklin®) 40 μm der Firma B&K, Deutschland) auf die mit Kleber (Verankerungsmittel) beschichtete Folie aus dem Beispiel aufkaschiert.

Verbund B

Verbundfolie mit PP

Die Folie aus dem Beispiel wird mit einem Kleber (Adcote 700 A+C der Firma Rohm&Haas, Deutschland) beschichtet, so dass die gebildete Klebstoffschicht 0,5 g/m$^2$ wiegt. Anschließend wird eine 30 μm dicke Siegelfolie aus Polypropylen (GND 30 der Firma Trespaphan, Deutschland) auf die mit Kleber (Verankerungsmittel) beschichtete Folie aus dem Beispiel aufkaschiert.

Verbund C

Verbundfolie mit PET

Die Folie aus dem Beispiel wird mit einem Kleber (Adcote 700 A+C der Firma Rohm&Haas, Deutschland) beschichtet, so dass die gebildete Klebstoffschicht 0,5 g/m$^2$ wiegt. Anschließend wird eine 20 $\mu$m dicke Siegelfolie aus PET (Hostaphan® RHS 20 der Fa. Mitsubishi Polyester Film GmbH, Wiesbaden, Deutschland), die biaxial orientiert ist, auf die mit Kleber (Verankerungsmittel) beschichtete Folie aus dem Beispiel aufkaschiert. Wird als erfindungsgemäße Folie eine bereits siegelfähige Folie eingesetzt, so ersetzt diese die obige RHS-Folie. Als PET-Folie dient in diesem Fall die nicht siegelfähige Folie RNK 12 (Mitsubishi Polyester Film GmbH, Wiesbaden, Deutschland).

**Beispiele**

Als Vergleich für die Verbesserung der Shelflife dienten handelsübliche Verpackungsfolien der Firma Mitsubishi Polyester Film GmbH (Deutschland).

Beispiel 1

Es wird eine 19 $\mu$m dicke, transparente, einseitig siegelfähige Folie hergestellt. Die Basisschicht ist 15 mm dick und die Deckschichten A und C sind jeweils 2 $\mu$m dick.

Rohstoffmischung Basisschicht B:

| | | |
|---|---|---|
| R1: | PET-Rohstoff RT49 von KoSa (Offenbach, Deutschland), SV = 800 | 50 Gew.-% |
| R2: | PET/PEN-Folienregenerat mit 10 % PEN-Anteil, SV = 700, IPA-Anteil = 4 % | 50 Gew.-% |

Rohstoffmischung siegelfähige Deckschicht A:

| | | |
|---|---|---|
| R3: | PET-Rohstoff SV = 800, enthält 5000 ppm Sylysia® 320 (Fuji Japan; $d_{50}$ = 2,4 $\mu$m) und 7000 ppm Aerosil® TT600 (Degussa/Deutschland) | 1 Gew.-% |
| R4: | PET-Rohstoff, SV = 800, mit 70 Mol.-% Ethylenterephthalat und 30 Mol-% Ethylenisophthalat | 69 Gew.-% |
| R5: | 100 % PEN, SV = 650 | 10 Gew.-% |
| R2: | s.o. | 20 Gew.-% |

Rohstoffmischung Deckschicht C:

| | | |
|---|---|---|
| R1: | s.o. | 85 Gew.-% |
| R3: | s.o. | 15 Gew.-% |

Sauerstoffbarriere = 60 {cm$^3$/(m$^2$·d·bar)}·{19 $\mu$m/12 $\mu$m}
Shelflife-Anstieg in % im Vergleich zu einem analogen Verbund mit der Folie RHS 19

(Mitsubishi Polyester Film GmbH, Wiesbaden, Deutschland):

| | |
|---|---|
| Verbund A: | 55 % |

8

Tabelle fortgesetzt

| Verbund B: | 63 % |
|---|---|
| Verbund C: | 40 % |

Beispiel 2

Es wird eine 12 µm dicke, transparente Folie hergestellt. Die Basisschicht ist 9 µm dick und die Deckschichten A und A' sind jeweils 1,5 µm dick.

Rohstoffmischung Basisschicht B:

| R1: | PET-Rohstoff RT49 von KoSa, SV = 800 | 42 Gew.-% |
|---|---|---|
| R6: | PET/PEN-Folienregenerat mit 90 % PET u.10 % PEN-Anteil, SV = 700, Asche = 0,1 % | 50 Gew.-% |
| R5: | s.o. | 8 Gew.-% |

Rohstoffmischung Deckschichten A + A':

| R1: | s.o. | 94 Gew.-% |
|---|---|---|
| R3: | s.o. | 6 Gew.-% |

Sauerstoffbarriere = 93 {cm$^3$/(m$^2$·d·bar)}·{12 µm/12 µm}
Shelflife-Anstieg in % im Vergleich zu einem analogen Verbund mit der Folie RNK 12

(Mitsubishi Polyester Film GmbH, Wiesbaden, Deutschland):

| Verbund A: | 59 % |
|---|---|
| Verbund B: | 100 % |
| Verbund C: | 55 % |

**Patentansprüche**

1. Mindestens zweischichtige Polyesterfolie mit einer Gesamtdicke von 5 bis 200 µm, die - bezogen auf die Masse der Gesamtfolie - neben Polyethylenterephthalat 2 bis 20 Gew.-% Polyethylennaphthalat (PEN) enthält, wobei mindestens eine Außenschicht weniger als 0,1 Gew.-% PEN (bezogen auf die Masse dieser Außenschicht) enthält und wobei das Polyethylennaphthalat in jeder Schicht einen Gehalt von 25 Gew.-% nicht überschreitet.

2. Folie nach Anspruch 1, **dadurch gekennzeichnet, dass** sie einen Schmelzpeak zwischen 230 und 270 °C aufweist.

3. Folie nach Anspruch 1 oder 2, **dadurch gekennzeichnet, dass** die Polyethylennaphthalat-Konzentration bei mindestens 5 Gew.-% liegt (bezogen auf die Masse der Gesamtfolie).

4. Folie nach einem der Ansprüche 1 bis 3, **dadurch gekennzeichnet, dass** sie 0,5 bis 2,5 Gw.-% Isophthalsäure (IPA) enthält (bezogen auf die Masse der Gesamtfolie).

5. Folie nach einem der Ansprüche 1 bis 4, **dadurch gekennzeichnet, dass** sie aufgebaut ist aus einer Polyethylennaphthalat-haltigen Basisschicht (B) und einer Außenschicht (A) mit weniger als 0,1 Gew.-% PEN.

6. Folie nach einem der Ansprüche 1 bis 4, **dadurch gekennzeichnet, dass** sie aufgebaut ist aus einer Polyethylen-

naphthalat haltigen Basisschicht (B) und zwei Außenschichten (A) und (A) oder (A) und (A') mit jeweils weniger als 0,1 Gew.-% PEN.

7. Folie nach einem der Ansprüche 1 bis 4, **dadurch gekennzeichnet, dass** sie aufgebaut ist aus einer Polyethylen-naphthalat-haltigen Basisschicht (B) und einer Außenschicht (A) mit weniger als 0,1 Gew.-% PEN und einer weiteren Außenschicht (C) auf der (A) gegenüberliegenden Seite der Basisschicht.

8. Folie nach Anspruch 7, **dadurch gekennzeichnet, dass** die Außenschicht (C) eine zusätzliche Funktionalität aufweist.

9. Verfahren zur Herstellung einer Folie nach Anspruch 1, wobei die den einzelnen Schichten der Folie entsprechenden Schmelzen durch eine Flachdüse koextrudiert werden, die so erhaltene Vorfolie zur Verfestigung auf einer oder mehreren Walzen abgezogen wird, die Vorfolie anschließend biaxial gestreckt, die biaxial gestreckte Folie thermofixiert und gegebenenfalls an der zur Behandlung vorgesehenen Oberflächenschicht corona- oder flammbehandelt wird, **dadurch gekennzeichnet, dass** die Vorfolie so biaxial gestreck wird, dass die resultierende Folie eine Gesamtdicke von 5 bis 200 $\mu$m erhält und wobei Folie - bezogen auf die Masse der Gesamtfolie - neben Polyethylenterephthalat 2 bis 20 Gew.-% Polyethylennaphthalat (PEN) enthält, wobei mindestens eine Außenschicht weniger als 0,1 Gew.-% PEN (bezogen auf die Masse dieser Außenschicht) enthält und wobei das Polyethylen-naphthalat in jeder Schicht einen Gehalt von 25 Gew.-% nicht überschreitet.

10. Verpackungsverbund aus einer Folie nach Anspruch 1 und einer weiteren Folie,

11. Verpackungsverbund nach Anspruch 10, **dadurch gekennzeichnet, dass** die weitere Folie eine Polyesterfolie, Polyamidfolie, Polyethylenfolie oder Polypropylenfolie ist.

12. Verwendung der Folie nach Anspruch 1 zur Herstellung von Verpackungsverbunden.

13. Verwendung der Folie nach Anspruch 1 zur Herstellung von Verpackungsverbunden mit UV-Schutz.

**Claims**

1. An at least two-layer polyester film with a total thickness of from 5 to 200 $\mu$m which comprises, alongside polyethylene terephthalate, from 2 to 20% by weight - based on the weight of the entire film - of polyethylene naphthalate (PEN), where at least one outer layer comprises less than 0.1% by weight of PEN (based on the weight of this outer layer) and where the polyethylene naphthalate content in each layer does not exceed 25% by weight.

2. The film as claimed in claim 1, which has a melting peak at from 230 to 270°C.

3. The film as claimed in claim 1 or 2, wherein the concentration of polyethylene naphthalate is at least 5% by weight (based on the weight of the entire film).

4. The film as claimed in any of claims 1 to 3, which comprises from 0.5 to 2.5% by weight of isophthalic acid (IPA) (based on the weight of the entire film).

5. The film as claimed in any of claims 1 to 4, which is composed of a polyethylene-naphthalate-containing base layer (B) and of an outer layer (A) with less than 0.1% by weight of PEN.

6. The film as claimed in any of claims 1 to 4, which is composed of a polyethylene-naphthalate-containing base layer (B) and two outer layers (A) and (A), or (A) and (A'), each with less than 0.1% by weight of PEN.

7. The film as claimed in any of claims 1 to 4, which is composed of a polyethylene-naphthalate-containing base layer (B) and of an outer layer (A) with less than 0.1% by weight of PEN, and of another outer layer (C) on that side of the base layer opposite to (A).

8. The film as claimed in claim 7, wherein the outer layer (C) has an additional functionality.

9. A process for producing a film as claimed in claim 1, where the melts corresponding to the individual layers of the film are coextruded through a flat-film die, the resultant prefilm is drawn off for solidification on one or more rolls, the prefilm is then biaxially stretched, and the biaxially stretched film is heat-set and, where appropriate, corona- or flame-treated on the surface intended for treatment which comprises biaxially stretching the prefilm in such a way as to give the resultant film a total thickness of from 5 to 200 μm, and where the film comprises, alongside polyethylene terephthalate, from 2 to 20 % by weight - based on the weight of the entire film - of polyethylene naphthalate (PEN), where at least one outer layer comprises less than 0.1 % by weight of PEN (based on the weight of this outer layer), and where the polyethylene naphthalate content in each layer does not exceed 25 % by weight.

**10.** A packaging composite made from a film as claimed in claim 1 and from another film.

**11.** The packaging composite as claimed in claim 10, wherein the other film is a polyester film, polyamide film, polyethylene film, or polypropylene film.

**12.** The use of the film as claimed in claim 1 for producing packaging composites.

**13.** The use of the film as claimed in claim 1 for producing packaging composites with UV protection.

**Revendications**

**1.** Film de polyester au moins bicouche, ayant une épaisseur totale de 5 à 200 μm, qui, en plus de poly(éthylène-téréphtalate), contient - par rapport à la masse de l'ensemble du film - 2 à 20 % en poids de poly(éthylène-naphtalate) (PEN), au moins une couche externe contenant moins de 0,1 % en poids de PEN (par rapport à la masse de cette couche externe) et où le poly(éthylène-naphtalate) dans chaque couche n'excède pas une concentration de 25 % en poids.

**2.** Film selon la revendication 1, **caractérisé en ce qu'**il présente un pic de fusion compris entre 230 et 270°C.

**3.** Film selon la revendication 1 ou 2, **caractérisé en ce que** la concentration du poly(éthylène-naphtalate) est d'au moins 5 % en poids (par rapport à la masse de l'ensemble du film).

**4.** Film selon l'une quelconque des revendications 1 à 3, **caractérisé en ce qu'**il contient de 0,5 à 2,5 % en poids d'acide isophtalique (IPA) (par rapport à la masse de l'ensemble du film).

**5.** Film selon l'une quelconque des revendications 1 à 4, **caractérisé en ce qu'**il est constitué d'une couche de base (B) contenant du poly(éthylène-naphtalate) et d'une couche externe (A) comportant moins de 0,1 % en poids de PEN.

**6.** Film selon l'une quelconque des revendications 1 à 4, **caractérisé en ce qu'**il est constitué d'une couche de base (B) contenant du poly(éthylène-naphtalate) et de deux couches externes (A) et (A) ou (A) et (A') comportant chacune moins de 0,1 % en poids de PEN.

**7.** Film selon l'une quelconque des revendications 1 à 4, **caractérisé en ce qu'**il est constitué d'une couche de base (B) contenant du poly(éthylène-naphtalate) et d'une couche externe (A) comportant moins de 0,1 % en poids de PEN et d'une autre couche externe (C) sur la face de la couche de base qui est adjacente à (A).

**8.** Film selon la revendication 7, **caractérisé en ce que** la couche externe (C) présente une fonctionnalité supplémentaire.

**9.** Procédé pour la fabrication d'un film selon la revendication 1, dans lequel les masses fondues correspondant aux couches individuelles du film sont coextrudées à travers une filière plate, le pré-film ainsi obtenu est tiré pour la solidification sur un ou plusieurs cylindres, le pré-film est ensuite étiré biaxialement, le film étiré biaxialement est thermofixé et éventuellement traité par corona ou à la flamme sur la couche superficielle prévue pour le traitement, **caractérisé en ce que** le pré-film est étiré biaxialement de manière que le film résultant acquiert une épaisseur totale de 5 à 200 μm, et dans lequel, en plus de poly(éthylène-téréphtalate), le film contient - par rapport à la masse de l'ensemble du film - 2 à 20 % en poids de poly(éthylène-naphtalate) (PEN), au moins une couche externe contenant moins de 0,1 % en poids de PEN (par rapport à la masse de cette couche externe) et le poly(éthylène-naphtalate) dans chaque couche n'excédant pas une concentration de 25 % en poids.

**10.** Composite d'emballage à base d'un film selon la revendication 1 et d'un autre film.

**11.** Composite d'emballage selon la revendication 10, **caractérisé en ce que** l'autre film est un film de polyester, un film de polyamide, un film de polyéthylène ou un film de polypropylène.

**12.** Utilisation du film selon la revendication 1, pour la fabrication de composites d'emballage.

**13.** Utilisation du film selon la revendication 1, pour la fabrication de composites d'emballage à protection contre les UV.